# EUROPEAN PATENT APPLICATION

(11) **EP 3 239 693 A1**
(43) Date of publication of application: **01.11.2017**
(21) Application number: 15873243.8
(22) Date of filing: 25.12.2015
(51) Int. Cl.: G01N 21/3563, D21H 11/14

(54) **METHOD FOR SORTING PRINTED MATTER AND PAPERMAKING METHOD USING PRINTED MATTER**

(30) Priority: 26.12.2014 JP 2014263764
(71) Applicant: Nippon Paper Industries Co., Ltd., Tokyo 114-0002 (JP)
(72) Inventor: FUKUOKA, Moe, Tokyo 114-0002 (JP); GOTO, Shisei, Tokyo 114-0002 (JP); TOYOTA, Kazumasa, Tokyo 114-0002 (JP); HIRABARU, Chika, Tokyo 114-0002 (JP); TAKATA, Michiyoshi, Tokyo 114-0002 (JP); OTSUHATA, Takanori, Tokyo 114-0002 (JP)
(74) Representative: Carpmaels & Ransford LLP
(86) International application number: PCT/JP2015/086172
(87) International publication number: WO 2016/104675

(57) **Abstract**

The present invention aims to provide a technique for easily and rapidly sorting printed materials suitable as raw materials of recycled paper.

Printed materials that are hard to recycle as waste paper can be identified by irradiating the surface of the printed materials with light and measuring the reflected light. Specifically, good quality recycled paper can be made efficiently from printed materials by removing printed materials having an absorption band around 1720 cm⁻¹, around 1260 cm⁻¹, around 1160 cm⁻¹, or around 700 cm⁻1 from waste paper raw materials when the printed materials are irradiated with light on their surface.

## Description

### TECHNICAL FIELD

The present invention relates to methods for sorting printed materials and methods for making paper using the printed materials. The present invention allows for sorting waste paper to select printed materials suitable for making recycled paper, and also allows for making recycled paper with excellent quality from the printed materials.

### BACKGROUND ART

Recently, the use of waste paper has been expanding to address resource conservation or environmental issues. On the other hand, the increase in quality and variety of printed materials have led to the result that printed materials recovered as waste paper often include hard-to-recycle printed waste papers such as UV printed materials and printed materials coated with resin films, and if these printed materials are used as raw materials to produce recycled paper, the runnability of the production process may be lowered or the quality of the resulting recycled paper may be impaired (non-patent document 1).

An approach to produce recycled paper from waste paper raw materials including such hard-to-recycle printed materials comprises applying a high mechanical load on the waste paper raw materials or using a lot of chemicals, which invites new problems such as deterioration of fibers or cost increase.

Another approach comprises sorting and rejecting hard-to-recycle printed materials from waste paper raw materials before they are introduced into the waste paper recycling process. Such an approach comprising rejecting hard-to-recycle printed materials as prohibitive materials from waste paper raw materials is efficient, but it sometimes had difficulty in sorting hard-to-recycle printed materials. For example, it is difficult to visually distinguish UV clear coated printed materials because they are made to be visually indistinguishable from conventional water-based clear coated printed materials.

A technique for identifying printed materials is proposed in JPA 1998-149473 (patent document 1), which relates to a method for identifying banknotes and the like using a Fourier transform infrared (FT-NIR) analyzer. However, this method is intended to identify valuable papers such as banknotes by using an optical fiber probe in contact with printed materials to measure their spectra, and therefore, it is a technique that can be applied to only printed materials in good condition with little contaminants or wrinkles but it was difficult to apply to complex and severely damaged printed materials such as waste paper raw materials for use as raw materials of recycled paper.

Further, JPA 2005-345208 (patent document 2) proposes a method for sorting printed materials that are hard to recycle as waste paper on the basis of the solubility of the printed surface of the printed materials in solvents. However, this method had problems such as low efficiency due to the use of organic solvents or the difficulty of applying it to uncoated printed papers.

### CITATION LIST

### PATENT DOCUMENTS

Patent document 1: JPA 1998-149473
Patent document 2: JPA 2005-345208

### NON-PATENT DOCUMENTS

Non-patent document 1: "Survey Report on Materials Subject to Recyclability Test in Waste Paper Recycling" (published by Paper Recycling Promotion Center).

### SUMMARY OF INVENTION

### TECHNICAL PROBLEM

Under the circumstances described above, the present invention aims to provide a technique for sorting printed materials suitable as raw materials of recycled paper. The present invention also aims to provide a technique for sorting waste paper to select printed materials suitable for making recycled paper and then making recycled paper.

### SOLUTION TO PROBLEM

As a result of careful studies about the problems described above, we found that printed materials that are hard to recycle as waste paper can be identified by irradiating the surface of the printed materials with light and measuring the reflected light. Specifically, we accomplished the present invention on the basis of the finding that good quality recycled paper can be made efficiently from printed materials by removing printed materials having an absorption band around 1720 cm⁻¹, around 1260 cm⁻¹, around 1160 cm⁻¹, or around 700 cm⁻¹ from waste paper raw materials when the printed materials are irradiated with light on their surface.

The present invention includes, but not limited to, the following embodiments.
(1) A method for identifying a printed material from which deinked pulp is hard to prepare, comprising:
   irradiating the surface of a printed material with light to measure the reflected light; and
   identifying and removing a printed material having (an) absorption band(s) at any one or more of 1710 to 1730 cm⁻¹, 1240 to 1270 cm⁻¹, 1160 to 1180 cm⁻¹, and 690 to 710 cm⁻¹.
(2) A method for recovering a waste paper raw material suitable for preparing deinked pulp, comprising:
   irradiating the surface of a printed material with light to measure the reflected light; and identifying a printed material having (an) absorption band(s) at any one or more of 1710 to 1730 cm⁻¹, 1240 to 1270 cm⁻¹, 1160 to 1180 cm⁻¹, and 690 to 710 cm⁻¹.
(3) A method for preparing a deinked pulp from a printed material, comprising:
   irradiating the surface of a printed material with light to measure the reflected light;
   identifying a printed material having (an) absorption band(s) at any one or more of 1710 to 1730 cm⁻¹, 1240 to 1270 cm⁻¹, 1160 to 1180 cm⁻¹, and 690 to 710 cm⁻¹; and
   deinking a waste paper raw material from which the identified printed material has been removed to give a deinked pulp.
(4) A method for making a paper, comprising:
   irradiating the surface of a printed material with light to measure the reflected light;
   identifying a printed material having (an) absorption band(s) at any one or more of 1710 to 1730 cm⁻¹, 1240 to 1270 cm⁻¹, 1160 to 1180 cm⁻¹, and 690 to 710 cm⁻¹;
   deinking a waste paper raw material from which the identified printed material has been removed to give a deinked pulp; and
   making a paper from a pulp raw material containing the deinked pulp prepared.
(5) The method of any one of (1) to (4), comprising measuring the absorption spectra of the surface of the printed material by Attenuated Total Reflection (ATR).
(6) The method of any one of (1) to (5) wherein the identifying step comprises identifying a printed material from which deinked pulp is hard to prepare if the absorbance of the printed material in an absorption band at 1710 to 1730 cm⁻¹ is 1.1-fold or more higher than the absorbance in an absorption band around 2920 cm⁻¹.
(7) The method of any one of (1) to (6) wherein the identifying step comprises identifying a printed material from which deinked pulp is hard to prepare if the absorbance of the printed material in an absorption band at 1160 to 1180 cm⁻¹ is 3.1-fold or more higher than the absorbance in an absorption band around 2920 cm⁻¹.
(8) The method of any one of (1) to (7) wherein the identifying step comprises identifying a printed material from which deinked pulp is hard to prepare if the absorbance of the printed material in an absorption band at 1240 to 1270 cm⁻¹ is 3.1-fold or more higher than the absorbance in an absorption band around 2920 cm⁻¹.
(9) The method of any one of (1) to (8) wherein the identifying step comprises identifying a printed material from which deinked pulp is hard to prepare if the absorbance of the printed material in an absorption band at 690 to 710 cm⁻¹ is 3.1-fold or more higher than the absorbance in an absorption band around 2920 cm⁻¹.
(10) An apparatus for identifying a printed material from which deinked pulp is hard to prepare, comprising:
   an irradiation part for irradiating the surface of a printed material with light;
   a light receiving part for measuring the reflected light; and
   an identification part for identifying whether or not (an) absorption band(s) occur(s) at any one or more of 1710 to 1730 cm⁻¹, 1240 to 1270 cm⁻¹, 1160 to 1180 cm⁻¹, and 690 to 710 cm⁻¹.
(11) The apparatus of (10) wherein the absorption spectra of the surface of the printed material is measured by Attenuated Total Reflection (ATR) method.
(12) A printed material identified by the method of (1).
(13) A waste paper raw material recovered by the method of (2).
(14) A deinked pulp prepared by the method of (3).
(15) A paper made by the method of (4).

### ADVANTAGEOUS EFFECTS OF INVENTION

The present invention allows for identifying hard-to-recycle printed materials, whereby printed materials from which deinked pulp is easy to prepare can be sorted and high-quality deinked pulp can be prepared efficiently. The techniques of the present invention allow for identifying hard-to-recycle printed materials relatively easily and rapidly so that they can be widely applied in waste paper storage yards, pulp plants and the like.

Further, the present invention allows for sorting printed materials suitable for preparing deinked pulp so that excellent recycled paper containing a reduced number of dirt particles or the like can be made.

### BRIEF DESCRIPTION OF DRAWINGS

Figure 1 is a photograph showing the appearance of the FT-IR system used in the Experimental examples.
Figure 2 is a series of photographs showing the appearance of various printed materials used in the Experimental examples (a: printed material 1, b: printed material 2, c: printed material 3, d: printed material 4, e: printed material 5).

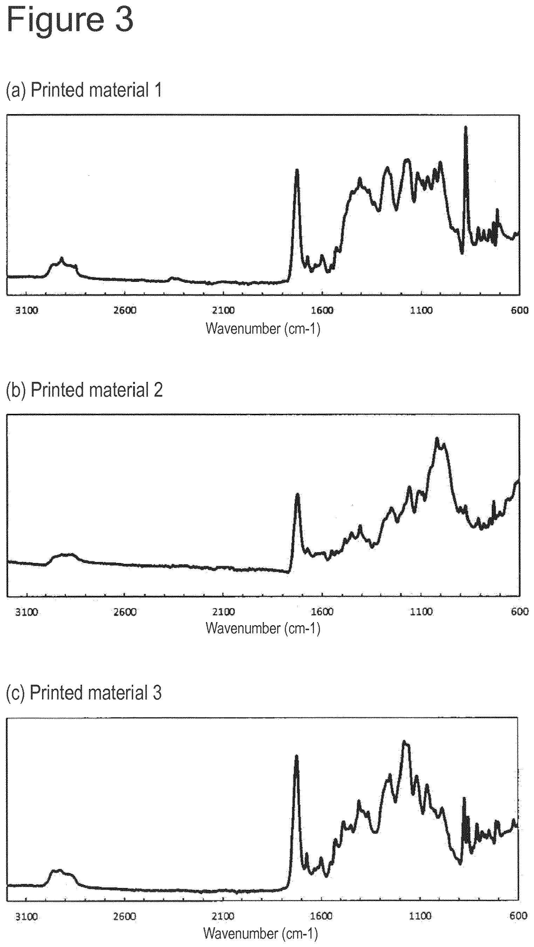

Figure 3 shows the absorbances on the surface of the printed materials measured in Experiment 1 (a: printed material 1, b: printed material 2, c: printed material 3).

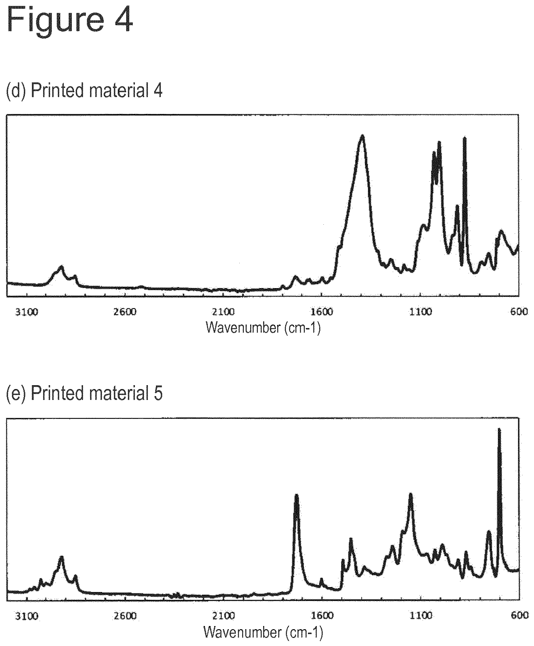

Figure 4 shows the absorbances on the surface of the printed materials measured in Experiment 1 (d: printed material 4, e: printed material 5).

### DESCRIPTION OF EMBODIMENTS

The present invention relates to a technique for sorting printed materials suitable as raw materials of recycled paper. The present invention also relates to a technique for sorting waste paper to select printed materials suitable for making recycled paper and then making recycled paper.

In the present invention, printed materials are used. The printed materials that can be used are not specifically limited so far as they comprise a substrate including paper on which an image has been printed, and the present invention can be applied to, for example, printed materials comprising a paper covered with a film or the like on which an image has been printed, printed materials comprising a coated paper on which an image has been printed, printed materials comprising an uncoated paper on which an image has been printed, and the like. Specifically, the present invention can be applied to waste papers such as newsprint paper, mechanical paper, woodfree paper, coated paper, lightweight coated paper, heat-sensitive recording paper, carbonless paper, woodfree colored paper, paper for plain paper copiers (paper for toner printing), paper containers, stickers and labels, ledger paper, corrugated fiberboard, white board and the like on which an image has been printed, and the present invention can also be applied to glossy printed materials and printed materials having undergone a surface treatment such as overprint varnishing or UV clear coating.

Waste papers on which an image has been printed by any printing method can be used as printed materials to which the present invention is applied, and the present invention allows for sorting printed materials suitable for preparing deinked pulp or recycled paper. Printing methods by which an image has been printed on the printed materials include, for example, UV printing using UV-curable inks, hybrid UV-curable inks, highly sensitive UV-curable inks and the like; relief printing such as flexographic printing; intaglio printing such as gravure printing; lithographic printing such as offset printing; stencil printing such as screen printing (silkscreen printing); electrostatic printing using electrostatic forces (toner printing); inkjet printing and laser printing widely used in printers for personal computers, etc. The ink with which an image has been printed is not specifically limited either, and printed materials on which an image has been printed with any coloring material used in various printing methods can be used. As described above, the present invention relates to methods for sorting and removing printed materials that are hard to recycle in the waste paper recycling process by measuring the reflected light from the surface of the printed materials, as well as methods for recycling waste paper.

In the present invention, the printed materials are irradiated with light on their printed surface to measure the reflected light. They may be irradiated with light in the infrared region and, in one embodiment, they may be irradiated with light having a wavelength of 0.5 to 1000 µm, for example. In one embodiment, absorption spectra of the printed materials on their surface can be measured in the wavenumber range of about 300 to 3000 cm⁻¹.

In the present invention, any method known as means for measuring infrared (IR) spectra of solid samples can be used. For example, widely used FT-IR techniques such as Diffuse Reflection and Attenuated Total Reflection (ATR) can preferably be used in the present invention because IR spectra of printed materials on their printed surface can be easily measured.

In the present invention, printed materials having (an) absorption band(s) at any one or more of 1710 to 1730 cm⁻¹, 1240 to 1270 cm⁻¹, 1160 to 1180 cm⁻¹, and 690 to 710 cm⁻¹ are identified when their absorption spectra in the infrared region are measured. As shown in the Examples described later, our verification revealed that printed materials having such an absorption band are hard to deink to prepare deinked pulp or require much chemicals or energy to prepare deinked pulp. In the present invention, printed materials unsuitable for preparing deinked pulp can be identified by recognizing printed materials having (an) absorption band(s) at any one or more of 1710 to 1730 cm⁻¹, 1240 to 1270 cm⁻¹, 1160 to 1180 cm⁻¹, and 690 to 710 cm⁻¹. The reason why printed waste papers having these absorption bands are unsuitable for preparing deinked pulp is unknown in detail, but may be explained by the following presumption though the present invention is not bound to it. That is, it is generally known that peaks of esters and ethers are observed in the regions of 1710 to 1730 cm⁻¹, 1240 to 1270 cm⁻¹, and 1160 to 1180 cm⁻¹ so that printed materials having such absorption bands on the printed surface may be hard to deink. For example, UV printing is a printing method wherein an ink is cured/fixed with UV light, and the resulting UV printed materials are known as hard-to-deink printed materials and sometimes rejected as prohibitive materials from the preparation process of deinked pulp. In such UV printing, acrylic group-containing UV-curable inks capable of reacting with UV light are used so that such hard-to-deink printed materials can be identified by using the methods of the present invention. For similar reasons, hard-to-deink printed materials having undergone a surface treatment with an overprint varnish or a UV curable resin such as a UV clear coating can also be identified by using the present methods. Moreover, hybrid UV-curable inks and highly sensitive UV-curable inks that are easier to recycle than conventional UV-curable inks have recently been developed and used to improve the recyclability of UV printed materials and/or to reduce the energy required for UV printing, and they can also be identified by using the methods of the present invention. It should be noted that highly sensitive UV-curable inks as used herein refer to UV-curable inks that can be applied to printing methods such as the so-called energy-efficient UV systems, hybrid UV systems, LED-UV systems and the like. Furthermore, printed materials coated or laminated with a resin such as polystyrene, for example, are known as hard-to-recycle waste paper, and these printed materials can be identified by the presence or absence of an absorption band in the region around 700 cm⁻¹, specifically 690 to 710 cm⁻¹ because the polystyrene (PS)-containing printed materials should have an absorption band in this region.

In the present invention, printed materials having (an) absorption band(s) in the regions of 1710 to 1730 cm⁻¹, 1240 to 1270 cm⁻¹, 1160 to 1180 cm⁻¹, and 690 to 710 cm⁻¹ are identified, and they may have (an) absorption band(s) in any one or more of the four regions. In preferred embodiments, however, printed materials having absorption bands in two or more, three or all four of the regions of 1710 to 1730 cm⁻¹, 1240 to 1270 cm⁻¹, 1160 to 1180 cm⁻¹, and 690 to 710 cm⁻¹ may be identified. When printed materials having an absorption band in any one region of 1710 to 1730 cm⁻¹, 1240 to 1270 cm⁻¹, 1160 to 1180 cm⁻¹, and 690 to 710 cm⁻¹ are inhibited from entering the preparation process of deinked pulp, for example, hard-to-deink printed materials can be removed from the process and high-quality deinked pulp can be prepared efficiently, but printed materials that are not significantly hard to deink may also be removed from the process. In one embodiment, therefore, printed materials having absorption bands in two or more, three or all four of the regions of 1710 to 1730 cm⁻¹, 1240 to 1270 cm⁻¹, 1160 to 1180 cm⁻¹, and 690 to 710 cm⁻¹ are identified, thereby avoiding the possibility that printed materials useful as raw materials of deinked pulp may be unnecessarily removed from the process.

Alternatively, whether are not (an) absorption band(s) occur(s) in the regions of 1710 to 1730 cm⁻¹, 1240 to 1270 cm⁻¹, 1160 to 1180 cm⁻¹, and 690 to 710 cm⁻¹ may be automatically determined by a machine or the like. In such cases, the presence or absence of an absorption band can be determined on the basis of the region around 2500 to 3000 cm⁻¹ where no absorption band due to organic matters is typically observed, for example. Specifically, a printed material from which deinked pulp is hard to prepare can be identified if the absorbance of the printed surface of the printed material in an absorption band at 690 to 710 cm⁻¹ is 3.1-fold or more higher, more preferably 3.5-fold or more higher, still more preferably 4.0-fold or more higher than the absorbance in an absorption band around 2920 cm⁻¹, for example. Alternatively, a printed material from which deinked pulp is hard to prepare can be identified if the absorbance of the printed surface of the printed material in an absorption band at 1160 to 1180 cm⁻¹ is 3.1-fold or more higher, more preferably 3.5-fold or more higher, still more preferably 4.0-fold or more higher than the absorbance around 2920 cm⁻¹. As another alternative, a printed material from which deinked pulp is hard to prepare can be identified if the absorbance of the printed surface of the printed material in an absorption band at 1240 to 1270 cm⁻¹ is 3.1-fold or more higher, more preferably 3.5-fold or more higher, still more preferably 4.0-fold or more higher than the absorbance in an absorption band around 2920 cm⁻¹. Further, a printed material from which deinked pulp is hard to prepare can be identified if the absorbance of the printed surface of the printed material in an absorption band at 1710 to 1730 cm⁻¹ is 1.1-fold or more higher, more preferably 1.5-fold or more higher, still more preferably 2.0-fold or more higher than the absorbance in an absorption band around 2920 cm⁻¹. It should be noted that printed materials having absorption bands in two or more, three or all four of the regions of 1710 to 1730 cm⁻¹, 1240 to 1270 cm⁻¹, 1160 to 1180 cm⁻¹, and 690 to 710 cm⁻¹ rather than only one of them can also be identified as hard-to-recycle printed materials, as described above.

In the present invention, printed materials identified as described above may be rejected from the deinking process for preparing deinked pulp. Thus, in the present invention, printed materials having (an) absorption band(s) at any one or more of 1710 to 1730 cm⁻¹, 1240 to 1270 cm⁻¹, 1160 to 1180 cm⁻¹, and 690 to 710 cm⁻¹ on their printed surface may be removed from the preparation process of deinked pulp. Thus, in one aspect, the present invention can be understood to provide a method for recovering a waste paper raw material suitable for preparing deinked pulp.

In the present invention, the printed materials obtained as described above can be used as raw materials to prepare deinked pulp. The method for preparing deinked pulp is not specifically limited, and commonly known methods can be adopted. According to the present invention as described above, deinked pulp can be prepared from waste paper raw materials containing a smaller amount of hard-to-deink printed materials so that excellent deinked pulp can be prepared efficiently.

As used herein, deinked pulp refers to a pulp regenerated by removing printing inks and the like from printed materials, and it is typically obtained by disintegrating a printed material into a slurry and removing inks using a mechanical stress, a chemical such as a deinking agent or the like. Printed materials used as raw materials include, for example, newspaper, leaflets, magazines, books, office paper, enveloped letters, heat-sensitive paper, carbonless paper, corrugated fiberboard, white board, printed papers discharged from copiers or office automation equipment and the like. Printed materials containing adhesive matters such as pressure-sensitive adhesives, adhesive agents, adhesive tapes, and bookbinding glue on the spine of magazines or coatings or laminates of resins or the like can also be used as printed materials of the present invention. Further, the printed materials may contain inorganic particles known as ash. Ash refers to inorganic particles in general, such as fillers and pigments incorporated or coated during the making of paper and remaining after the paper has been incinerated. Examples include, but not limited to, calcium carbonate, talc, kaolin, titanium dioxide and the like.

To deink printed materials in the present invention, known deinking systems and deinking agents can be used. Examples of systems used in the deinking process may include, for example, kneaders, dispersers, floatators and the like. Examples of deinking agents include, but not limited to, known surfactants, e.g., nonionic surfactants, anionic surfactants, cationic surfactants and amphoteric surfactants such as fatty acid salts, higher alkyl sulfuric acid salts, alkyl benzenesulfonic acid salts, higher alcohols, alkyl phenols, alkylene oxide adducts of fatty acids or the like; and organic solvents, proteins, enzymes, natural polymers, synthetic polymers and the like. It should be understood that they can be used as deinking agents, irrespective of whether they consist of a single component or a mixture of two or more components.

Further in the present invention, the deinked pulp obtained as described above can be used to make paper. The papermaking method is not specifically limited, and commonly known methods can be adopted. According to the present invention, waste paper raw materials containing a smaller amount of hard-to-deink printed materials can be used so that excellent deinked pulp can be prepared efficiently, and therefore, excellent recycled paper can be made efficiently. It should be noted that the papermaking method of the present invention need not be performed using solely the deinked pulp obtained by the present invention, but may be performed using the deinked pulp obtained by the present invention at any proportion as a raw material pulp to make paper.

Papermaking may be performed using the deinked pulp of the present invention in combination with, for example, softwood or hardwood kraft pulp (NKP or LKP); softwood or hardwood-based mechanical pulp such as groundwood pulp (GP), refiner groundwood pulp (RGP), thermomechanical pulp (TMP), chemithermomechanical pulp (CTMP), chemigroundwood pulp (CGP), or semichemical pulp (SCP); waste paper pulp obtained by disintegrating corrugated fiberboard; coated brokes obtained by disintegrating brokes including coated paper or coating base paper and other papers; and mixtures of two or more of these pulps.

In the present invention, chemicals or fillers may be added during the process of making paper from pulp. Chemicals that can be added include sizing agents such as rosin emulsions or neutral rosin, alkyl ketene dimers, alkenyl succinic anhydrides, and styrene-acrylic copolymers; resins including cationic, zwitterionic or anionic polyacrylamide, polyvinylamine, and polyacrylic acid; dry paper strength enhancers such as guar gum; wet paper strength enhancers such as cationically, zwitterionically or anionically modified starches, polyamidoamine-epichlorohydrin, and carboxymethyl cellulose; freeness aids, colorants, dyes, fluorescent dyes, coagulants, bulking agents, retention aids, etc. The fillers may be any particles commonly known as inorganic fillers and organic fillers and are not specifically limited. Specifically, inorganic fillers include calcium carbonate (precipitated calcium carbonate, ground calcium carbonate, synthetic calcium carbonate), magnesium carbonate, barium carbonate, aluminum hydroxide, calcium hydroxide, magnesium hydroxide, zinc hydroxide, clay (kaolin, calcined kaolin, delaminated kaolin), talc, zinc oxide, zinc stearate, titanium dioxide, silica prepared from sodium silicate and mineral acids (white carbon, silica/calcium carbonate complexes, silica/titanium dioxide complexes), terra alba, bentonite, kieselguhr, calcium sulfate, inorganic fillers obtained by regenerating ashes from the deinking process, and inorganic fillers obtained by forming complexes with silica or calcium carbonate during regeneration, etc. Calcium carbonate-silica complexes may include not only complexes of calcium carbonate and/or precipitated calcium carbonate with silica but also complexes with amorphous silica such as white carbon. Among them, preferably used are fillers typically used in neutral and alkaline papermaking such as calcium carbonate or precipitated calcium carbonate-silica complexes.

In one aspect, the present invention provides an apparatus for identifying a printed material suitable for preparing deinked pulp. Thus, in one embodiment, the present invention provides an apparatus for identifying a printed material from which deinked pulp is hard to prepare, comprising: an irradiation part for irradiating the surface of a printed material with light; a light receiving part for measuring the reflected light; and an identification part for identifying whether or not (an) absorption band(s) occur(s) at any one or more of 1710 to 1730 cm⁻¹, 1240 to 1270 cm⁻¹, 1160 to 1180 cm⁻¹, and 690 to 710 cm⁻¹. The irradiation part for irradiating the surface of a printed material with light comprises a light source and a light path, and any commonly used such systems can be used. The light receiving part for measuring the reflected light can also be any known systems, among which those based on widely used FT-IR techniques such as Diffuse Reflection and Attenuated Total Reflection can preferably be used in the present invention, for example. FT-IR systems that can be used include known systems, but portable or handy systems that can be easily carried or conveyed by hand are preferably used. Examples of such FT-IR systems include "Alpha" from Bruker Optics (sampling cell: KBr), "Target-ID" from Smiths Detection (sampling cell: diamond) and the like. Systems using diamond in sampling cells are more preferred because cells of environmentally stable materials provide consistent results even if environmental conditions vary during measurement.

Further, a computer capable of detecting the peaks of absorption spectra can preferably be used as the identification part for identifying whether or not (an) absorption band(s) occur(s) at any one or more of 1710 to 1730 cm⁻¹, 1240 to 1270 cm⁻¹, 1160 to 1180 cm⁻¹, and 690 to 710 cm⁻¹. Tablet personal computers or laptop personal computers are preferably used because they can be easily carried or conveyed by hand. Finally, the apparatus of the present invention may comprise a part for outputting or visualizing the results determined. For example, it may comprise a display for visualizing the results determined, a printing part for printing them on a sheet of paper to output them, an outputting part for outputting data of the results determined, and the like.

### EXAMPLES

The following examples further illustrate the present invention without, however, limiting the invention thereto. As used herein, numerical ranges are intended to include their endpoints, and concentrations and the like are based on the weight unless otherwise specified.

### Experiment 1: Analyses of printed materials

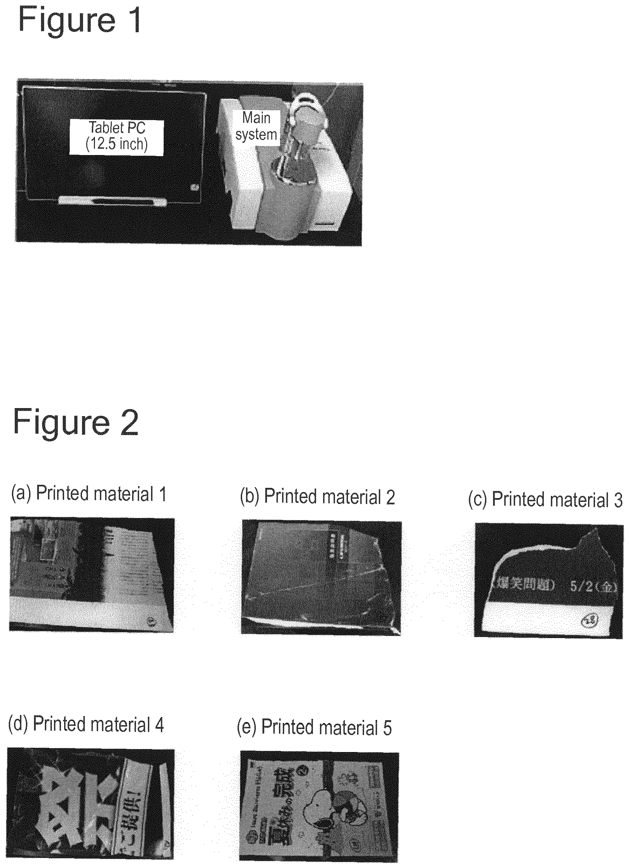

The absorbance of the following printed materials was measured on their surface using an FT-IR system. Specifically, the absorbance of the printed materials was measured on their printed surface by Attenuated Total Reflection (ATR) using a portable FT-IR system (Alpha from Bruker Optics) as shown in Figure 1.
- Printed material 1 (a UV printed coated paper);
- Printed material 2 (a coated paper printed with a UV-curable ink);
- Printed material 3 (a coated paper printed with a UV-curable ink);
- Printed material 4 (a material printed with an oil-based ink);
- Printed material 5 (a polystyrene-coated material printed with an oil-based ink).
Further, recyclability was evaluated according to a conventional method (evaluation of the solubility in acetone). Specifically, acetone was used as a solvent to evaluate the solubility of the printed surface of each printed material shown above in the solvent. The evaluation of the solubility in acetone was made by visually judging the separation of the printed surface of the printed material after it was wiped with KimWipes (from NIPPON PAPER CRECIA Co., LTD.) 30 seconds after dropping acetone, as described in the examples of JPA 1998-149473 (patent document 1). The evaluation standards are as follows. It should be noted that the conventional method judges printed materials having higher solubility in acetone to be more easily recycled in the waste paper recycling process.
○: Sufficiently separated (the printed surface dissolves in acetone);
Δ: Slightly separated (the ink transfers to the wiping paper);
x: Almost not separated.
[Table 1]

**Table 1. Evaluation results of Experiment 1**

| Printed material | Intensity of absorption band (fold of the intensity at 2920cm⁻¹) | | | | Evaluation of solubility in acetone (3-ckass evaluation) |
|---|---|---|---|---|---|
| | 1710-1730cm⁻¹ | 1240-1270cm⁻¹ | 1160-1180cm⁻¹ | 690-710cm⁻¹ | |
| Printed material 1 | 5.5X | 5.7X | 6.0X | 3.0X | x |
| Printed material 2 | 5.5X | 4.5X | 6.0X | 4.5X | x |
| Printed material 3 | 7.0X | 5.7X | 7.3X | 2.2X | Δ |
| Printed material 4 | 0.6X | 1.3X | 1.0X | 3.0X | ○ |
| Printed material 5 | 3.0X | 1.1X | 2.0X | 5.0X | x |

The results are shown in Table 1 and Figure 2. The table above and Figure 2 show that printed materials 1 to 3 and Printed material 5, i.e., printed materials having (an) absorption band(s) at any one or more of 1710 to 1730 cm⁻¹, 1240 to 1270 cm⁻¹, 1160 to 1180 cm⁻¹, and 690 to 710 cm⁻¹ were also evaluated as x or Δ by the conventional method (evaluation of the solubility in acetone). Thus, it was found that printed materials from which deinked pulp is hard to prepare can be identified by the present invention more easily than the conventional method.

Similar experiments to those described above were made except that "Target-ID" from Smiths Detection (sampling cell: diamond) was used as an FT-IR system instead of "Alpha" from Bruker Optics (sampling cell: KBr), to give similar results to those obtained by using "Alpha" from Bruker Optics. Thus, the deinkability of printed materials could also be determined when the printed materials were analyzed by ATR using a different FT-IR system.

### Experiment 2: Preparation of deinked pulps and making of recycled papers

The printed materials described in Experiment 1 were used as raw materials to prepare deinked pulps according to the procedure described below and the resulting deinked pulps were used to make recycled papers.

### (1) Disintegration in a pulper

Each printed material (80 g) and a paper for plain paper copiers (330 g, unprinted) were mixed with hot water (40°C, 2 L) and then disintegrated at 40°C for 6 minutes using a high-consistency disintegrator (from KUMAGAI RIKI KOGYO Co., Ltd.) to give a pulp slurry having a solids content of about 15% (sample A, undeinked).

### (2) Pulverization of the ink and deinking

Sample A was agitated at 500 counts in a PFI mill (from KUMAGAI RIKI KOGYO Co., Ltd.) to pulverize the ink. Then, the pulverized sample (about 7 g as solids) was placed on a 150-mesh sieve and showered with water from above to wash off the ink, and then the pulp remaining on the sieve was collected (sample B: deinked pulp).

### (3) Making of a recycled paper and dirt analysis

Each of sample A (undeinked pulp) and sample B (deinked pulp) was used to make a paper by hand according to JIS P 8222 (basis weight 60 g/m²). The resulting handsheet was analyzed for the pulverized ink using an image analyzer (EasyScan from Nippon Paper Unitec Co., Ltd.).
[Table 2]

**Table 2. Evaluation results of Experiment 2**

| Pulp raw material | Sample | Dirt count (count/m²) | | Dirt area (mm²/m²) | |
|---|---|---|---|---|---|
| | | ≥ϕ100µm | ≥ ϕ250µm | ≥ϕ100µm | ϕ250µm |
| Printed material 1 | A (before deinking) | 230,000 | 21,000 | 5,500 | 1,700 |
| | B (after deinking) | 180,000 | 10,000 | 4,200 | 700 |
| Printed material 4 | A (before deinking) | 3,500 | 150 | 60 | 10 |
| | B (after deinking) | 2,800 | 120 | 50 | 10 |
| Printed material 5 | A (before deinking) | 240,000 | 2,700 | 3,700 | 160 |
| | B (after deinking) | 140,000 | 1,800 | 2,500 | 120 |

The evaluation results are shown in the table above. The table shows that printed material 1 (a UV printed material) contains plenty of both small dirt particles (ϕ100 µm or more) and coarse dirt particles (ϕ250 µm or more) even after deinking, indicating that it is a hard-to-deink printed material as compared with printed material 4. On the other hand, printed material 5 (a polystyrene-coated printed material) is not preferred as a raw material of deinked pulp because dirt particles are not removed efficiently by deinking.

It should be noted that in the case of the Experiment described above, deinked pulps are considered to be usable for not only paperboard but also paper if they contain 10000 or less (preferably 5000 or less) dirt particles having a diameter ϕ of 100 µm or more. Deinked pulps are also considered to be usable for not only paperboard but also paper if they contain 1000 or less (preferably 500 or less) coarse dirt particles having a diameter ϕ of 250 µm or more.

### Experiment 3: Making of recycled papers

A deinked pulp was prepared by the same manner as in Experiment 2, and then the resulting deinked pulp (sample B) was mixed with LBKP (freeness 450 mL) and calcium carbonate (scalenohedral precipitated calcium carbonate having an average particle size of 3.4 µm) to prepare a stock (deinked pulp/LBKP/calcium carbonate = 7/3/1). This stock was used to make a recycled paper by hand according to JIS P 8222 (basis weight: 60 g/m²). The resulting handsheet was analyzed for the pulverized ink using an image analyzer by the same manner as in Experiment 2
[Table 3]

**Table 3. Evaluation results of Experiment 3**

| Pulp raw material | | Dirt count (count/m²) | | Dirt area (mm²/m²) | |
|---|---|---|---|---|---|
| (Weight ratio) | | ≥ ϕ100µm | ≥ ϕ250µm | ≥ ϕ100µm | ≥ ϕ250µm |
| Printed material 1 alone | (-) | 161,000 | 9,000 | 4,000 | 700 |
| Printed material 4 alone | (-) | 2,500 | 110 | 60 | 20 |
| Printed material 5 alone | (-) | 11,700 | 1,000 | 2,300 | 200 |
| Printed material 1 + Printed material 4 | (25:75) | 42,000 | 2,300 | 1,000 | 200 |
| Printed material 1 + Printed material 4 | (50:50) | 92,000 | 4,500 | 2,000 | 400 |
| Printed material 1 + Printed material 4 | (75:25) | 121,400 | 6,800 | 3,000 | 500 |

The table shows the results of recycled papers made by using different printed materials as raw materials of deinked pulps. The results of Experiments 2 and 3 show that the recycled papers made from deinked pulps prepared from printed material 1 and printed material 5 contain plenty of small dirt particles (ϕ 100 µm or more) and coarse dirt particles (ϕ250 µm or more), indicating that printed material 1 and printed material 5 are hard-to-deink materials as compared with printed material 4.

Further, it was possible to make a recycled paper containing less dirt particles when the hard-to-deink printed material 1 was removed and the easy-to-deink printed material 4 was used alone as a raw material as compared with a raw material comprising a combination of printed material 1 and printed material 4. This indicates that high-quality deinked pulp can be prepared and therefore, high-quality recycled paper can be made by identifying hard-to-deink printed materials according to the present invention and then removing the hard-to-deink printed materials from raw materials of deinked pulp.

It should be noted that in the case of the Experiment described above, deinked pulps are considered to be usable for not only paperboard but also paper if they contain 8000 or less (preferably 5000 or less) dirt particles having a diameter ϕ of 100 µm or more. Deinked pulps are also considered to be usable for not only paperboard but also paper if they contain 300 or less (preferably 200 or less) coarse dirt particles having a diameter ϕ of 250 µm or more.

## Claims

1. A method for identifying a printed material from which deinked pulp is hard to prepare, comprising:
irradiating the surface of a printed material with light to measure the reflected light; and
identifying a printed material having (an) absorption band(s) at any one or more of 1710 to 1730 cm⁻¹, 1240 to 1270 cm⁻¹, 1160 to 1180 cm⁻¹, and 690 to 710 cm⁻¹.

2. A method for recovering a waste paper raw material suitable for preparing deinked pulp, comprising:
irradiating the surface of a printed material with light to measure the reflected light; and
identifying and removing a printed material having (an) absorption band(s) at any one or more of 1710 to 1730 cm⁻¹, 1240 to 1270 cm⁻¹, 1160 to 1180 cm⁻¹, and 690 to 710 cm⁻¹.

3. A method for preparing a deinked pulp from a printed material, comprising:
irradiating the surface of a printed material with light to measure the reflected light;
identifying a printed material having (an) absorption band(s) at any one or more of 1710 to 1730 cm⁻¹, 1240 to 1270 cm⁻¹, 1160 to 1180 cm⁻¹, and 690 to 710 cm⁻¹; and
deinking a waste paper raw material from which the identified printed material has been removed to give a deinked pulp.

4. A method for making a paper, comprising:
irradiating the surface of a printed material with light to measure the reflected light;
identifying a printed material having (an) absorption band(s) at any one or more of 1710 to 1730 cm⁻¹, 1240 to 1270 cm⁻¹, 1160 to 1180 cm⁻¹, and 690 to 710 cm⁻¹;
deinking a waste paper raw material from which the identified printed material has been removed to give a deinked pulp; and
making a paper from a pulp raw material containing the deinked pulp prepared.

5. The method of any one of claims 1 to 4, comprising measuring the absorption spectra of the surface of the printed material by Attenuated Total Reflection (ATR).

6. The method of any one of claims 1 to 5 wherein the identifying step comprises identifying a printed material from which deinked pulp is hard to prepare if the absorbance of the printed material in an absorption band at 1710 to 1730 cm⁻¹ is 1.1-fold or more higher than the absorbance in an absorption band around 2920 cm⁻¹.

7. The method of any one of claims 1 to 6 wherein the identifying step comprises identifying a printed material from which deinked pulp is hard to prepare if the absorbance of the printed material in an absorption band at 1160 to 1180 cm⁻¹ is 3.1-fold or more higher than the absorbance in an absorption band around 2920 cm⁻¹.

8. The method of any one of claims 1 to 7 wherein the identifying step comprises identifying a printed material from which deinked pulp is hard to prepare if the absorbance of the printed material in an absorption band at 1240 to 1270 cm⁻¹ is 3.1-fold or more higher than the absorbance in an absorption band around 2920 cm⁻¹.

9. The method of any one of claims 1 to 8 wherein the identifying step comprises identifying a printed material from which deinked pulp is hard to prepare if the absorbance of the printed material in an absorption band at 690 to 710 cm⁻¹ is 3.1-fold or more higher than the absorbance in an absorption band around 2920 cm⁻¹.

10. An apparatus for identifying a printed material from which deinked pulp is hard to prepare, comprising:
an irradiation part for irradiating the surface of a printed material with light;
a light receiving part for measuring the reflected light; and
an identification part for identifying whether or not (an) absorption band(s) occur(s) at any one or more of 1710 to 1730 cm⁻¹, 1240 to 1270 cm⁻¹, 1160 to 1180 cm⁻¹, and 690 to 710 cm⁻¹.

11. The apparatus of claim 10 wherein the absorption spectra of the surface of the printed material is measured by Attenuated Total Reflection (ATR) method.
